# EUROPEAN PATENT SPECIFICATION

(11) **EP 4 381 585 B1**
(45) Date of publication and mention of the grant of the patent: **11.11.2026**
(21) Application number: 22853681.9
(22) Date of filing: 13.07.2022
(51) Int. Cl.: H02J 50/10, F16H 57/027, H02J 50/40

(54) **GEARBOX EXPANSION CAP AND VALVE ASSEMBLY**
GETRIEBEEXPANSIONSVENTILKAPPE UND VENTILANORDNUNG
ENSEMBLE COUVERCLE ET SOUPAPE À EXPANSION DE BOÎTE DE TRANSMISSION

(30) Priority: 06.08.2021 US 202163230197 P
(43) Date of publication of application: 12.06.2024
(73) Proprietor: Valmont Industries, Inc., Omaha, NE 68154 (US)
(72) Inventor: DILLON, Cory J., Bennington, Nebraska 68007 (US)
(74) Representative: Zacco Sweden AB
(86) International application number: PCT/US2022/036967
(87) International publication number: WO 2023/014474

(56) References cited:
- CN-A- 111 442 122
- CN-A- 111 486 252
- ES-T3- 2 315 618
- JP-A- 2018 035 824
- US-A- 3 253 684
- US-A1- 2017 335 923
- US-B1- 10 156 293
- US-B1- 6 843 747
- US-B1- 8 826 774

## Description

### RELATED APPLICATIONS

The present application claims priority to U.S. Provisional Application No. 63/230,197 filed August 6, 2021.

### BACKGROUND AND FIELD OF THE PRESENT INVENTION:

### Field of the Present invention

The present invention relates to an apparatus for venting and controlling pressures within a gearbox.

### Background of the Invention

Modern field irrigation machines are combinations of drive systems and sprinkler systems. In operation, self-propelled towers of irrigation machines are driven by drive motors attached to the wheels of each tower. To allow for the translation of torque from the drive motors to the wheels, drive motors generally include gearboxes such as worm gearboxes. The worm gearbox used in irrigation systems is typically a closed system, meaning it cannot freely vent to atmosphere due to the wet and dirty environment. In the prior art, worm gearboxes have used diaphragms to prevent contamination ingress, and to control internal pressure/vacuum of the gearbox. This is effective in many applications, but with the diaphragm in place, there is always some degree of pressure/vacuum present in the gearbox. This creates unwanted stress on the gearbox and gearbox components (i.e., seals, gears, etc.) and the constant pressure is known to diminish the potential life of the gearbox.

Other prior art solutions have included adding breathers directly into the fill port of the wheel gearbox. These solutions have been found to cause oil leaks due to gearbox oil expansion as well as allow contamination of the gearbox interior during movement of the irrigation tower. Other example solutions are shown in U.S. Publication No. US20080156374A1 which discloses a breather device which includes a valve mechanism for blocking the end of a breather path when water pressure of water flowing toward the breather path acts on the valve mechanism. Similarly, WO2011058571A1 discloses an air breather vent assembly for a mechanically enclosed environment which includes a single or double ball valve housed inside a central exhaust and intake chamber of body to allow for suction and exhaust of air. Further, US8944091 discloses a system for ventilation and aeration of a gear housing containing an oil filling and which has a line for connecting the gear housing to the atmosphere. US Patent No. US8826774 and U.S. Publication No. US20080156374A1 likewise show methods to relieve pressure within a gearbox.

For each of the prior art systems, oil leaks, contamination ingress and air flow stoppages are consistent occurrences. In order to overcome the limitations of the prior art, a system is needed which is able to effectively provide venting to the atmosphere while also limiting contamination within a gearbox during transport and irrigation operations.

US 3,253,684 A discloses drive transmissions between a driving and a driven member. A case contains an expansion chamber above an oil container and may have an airtight filler plug with a venting and overspill tube discharging surplus oil at a point distant from the exhaust system of the engine.

US 6,843,747 B1 discloses an expansion chamber for a hydrostatic transaxle. The expansion chamber is formed as part of the housing inside the main sump by ribs or other members extending from the housing and is closed by a cap to form a sealed chamber. A siphon tube may be secured to the cap or integrally formed therein, or formed by additional cast ribs or similar features formed into the housing and also sealed by the cap.

### Summary of the invention

To minimize the limitations found in the prior art, and to minimize other limitations that will be apparent upon the reading of the specifications, the present invention teaches a gearbox expansion cap that allows a gearbox unit to breathe to atmosphere while preventing the ingress of water or other materials into the gearbox or gearbox oil. According to a first preferred embodiment, the present invention includes air channels enclosed within a gearbox casting and which mate with air channels provided within the expansion cap.

According to a second preferred embodiment not according to the invention, an expansion cap includes a pressure relief plug to control gearbox pressures.

According to a further preferred embodiment not according to the invention, an expansion cap assembly includes a gravity plug which includes a ball which adjustably prevents oil from leaving the expansion cap when the gearbox is unlevel.

According to a further preferred embodiment not according to the invention, an alternative expansion cap assembly includes a hinged plate with a sealing portion which prevents oil from leaving the gearbox during shipping.

### Brief Description of the Drawings

FIG. 1 shows an illustration of an exemplary irrigation machine in accordance with a first preferred embodiment of the present invention.
FIG. 2 shows a perspective view of an exemplary drive tower in accordance with a first preferred embodiment of the present invention.
FIG. 3 shows a perspective view of an exemplary gearbox and gearbox valve assembly in accordance with the present invention.
FIG. 4 shows a perspective cut-away view of the exemplary gearbox and gearbox valve assembly shown in FIG. 3.
FIG. 5 shows a side, cut-away view of the first exemplary gearbox valve assembly shown in FIG. 3.
FIG. 6 shows a side, cut-away view of an exemplary pressure relief assembly as shown in FIG. 5 with an alternative vent plug.
FIG. 7 shows a side, cut-away view of an exemplary pressure relief assembly in accordance with a first preferred embodiment of the present invention.
FIG. 8 shows an enlarged portion of the pressure relief assembly as indicated in FIG. 7.
FIG. 9 shows a side, cut-away view of an exemplary gravity plug assembly in accordance with a further preferred embodiment of the present invention.
FIG. 10 shows a side, cut-away view of an exemplary flapper valve assembly in accordance with a preferred embodiment of the present invention.
FIG. 11 shows a side, cut-away view of the exemplary flapper valve assembly shown in FIG. 10 with the flapper assembly in a closed/sealed position.

### Description of the Preferred Embodiments

The present invention provides an apparatus for venting and controlling pressures within a gearbox. For the purposes of promoting an understanding of the principles of the present invention, reference will now be made to the embodiments illustrated in the drawings and specific language will be used to describe the same. It will nevertheless be understood that no limitation of the scope of the present invention is hereby intended. The descriptions, embodiments and figures used are not to be taken as limiting the scope of the claims.

Where the specification describes advantages of an embodiment or limitations of other prior art, the applicant does not intend to disclaim or disavow any potential embodiments covered by the appended claims unless the applicant specifically states that it is "hereby disclaiming or disavowing" potential claim scope.

As used herein, the word "exemplary" means "serving as an example, instance or illustration." The embodiments described herein are not limiting, but rather are exemplary only. It should be understood that the described embodiments are not necessarily to be construed as preferred or advantageous over other embodiments. Additionally, any examples or illustrations given herein are not to be regarded in any way as restrictions on, limits to, or express definitions of, any term or terms with which they are utilized. Instead, these examples or illustrations are to be regarded as illustrative only.

As used herein, the singular forms "a", "an" and "the" are intended to include the plural forms as well, unless the context clearly indicates otherwise. Additionally, the word "may" is used in a permissive sense (i.e., meaning "having the potential to'), rather than the mandatory sense (i.e., meaning "must"). Further, it should also be understood that throughout this disclosure, unless logically required to be otherwise, where a process or method is shown or described, the steps of the method may be performed in any order (i.e., repetitively, iteratively, or simultaneously) and selected steps may be omitted. It will be further understood that the terms "comprises," "comprising," "includes" and/or "including", when used herein, specify the presence of stated features, integers, steps, operations, elements, and/or components, but do not preclude the presence or addition of one or more other features, integers, steps, operations, elements, components, and/or groups thereof.

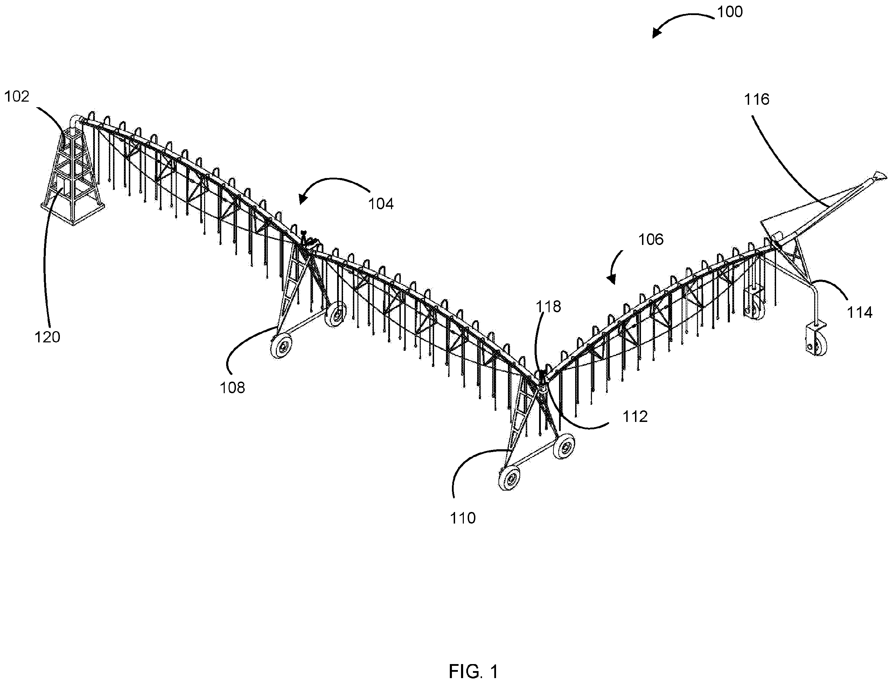

With reference now to FIG. 1, an exemplary irrigation machine 100 of the present invention may for example include a center pivot structure 102, a main span 104, and supporting drive towers 108, 110. The exemplary irrigation machine 100 may also include a corner span 106 attached at a connection point 112. The corner span 106 may be supported and moved by a steerable drive unit 114. The corner span 106 may include a boom 116 and an end gun (not shown) and/or other sprayers. Additionally, a position sensor 118 may provide positional and angular orientation data for the system. A central control panel 120 may also be provided and may enclose on-board computer systems for monitoring and controlling the operations of the irrigation machine. The control panel 120 may also be linked to a transceiver for transmitting and receiving data between system elements, device/internet clouds, remote servers and the like.

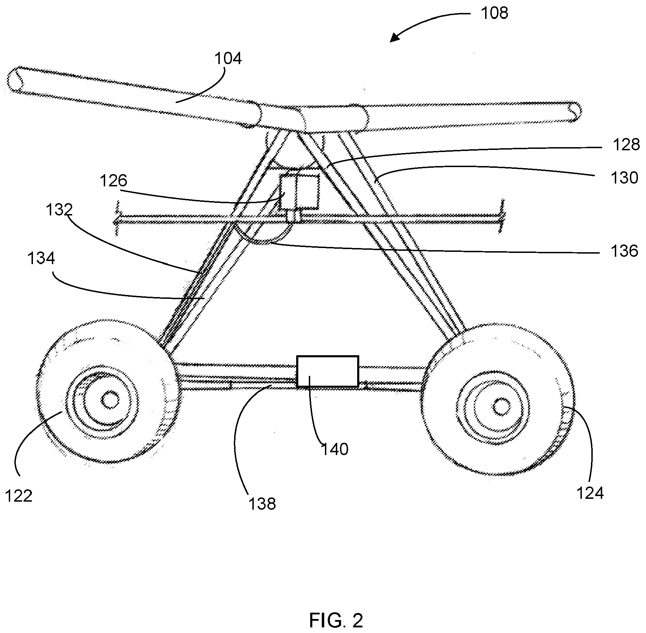

With reference now to FIG. 2, an exemplary drive tower 108 supporting a span 104 is shown in more detail. As shown, the frame of the drive tower 108 includes supporting legs 128, 130, 132, 134 which transfer the weight of the supported span 104 onto one or more wheels 122, 124. According to a preferred embodiment, one or more of the supporting wheels 122, 124 are preferably drive wheels which are driven by one or more drive motors 140. According to preferred embodiments, the one or more drive motors 140 used by the present invention may for example be variable speed motors or the like. For example, an exemplary motor used with the present invention may include: a switched reluctance motor (SRM), an AC induction motor with a variable frequency drive, a DC motor (such as a permanent magnet DC motor) or other motor types without limitation.

Referring again to FIG. 2, the drive tower 108 preferably includes a drive motor controller 126 which may receive control instructions from the tower control panel 120 or from another source. The drive motor controller 126 may preferably provide electrical power to the drive motor 140 via one or more electrical control lines/wires 136. In operation, the electrical power provided through the drive motor controller 126 may be transformed by the drive motor 140 into torque/rotational motion applied to a drive shaft 138.

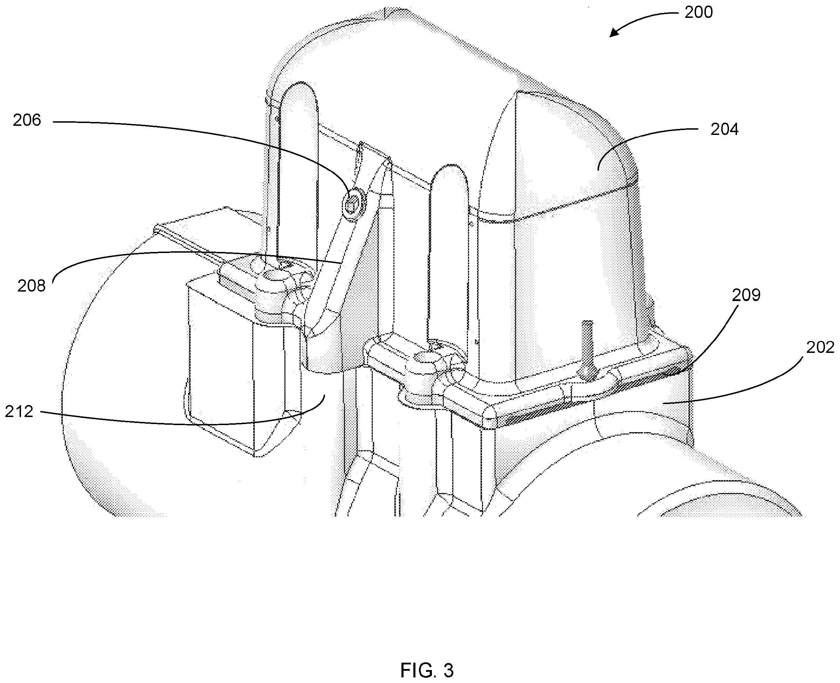

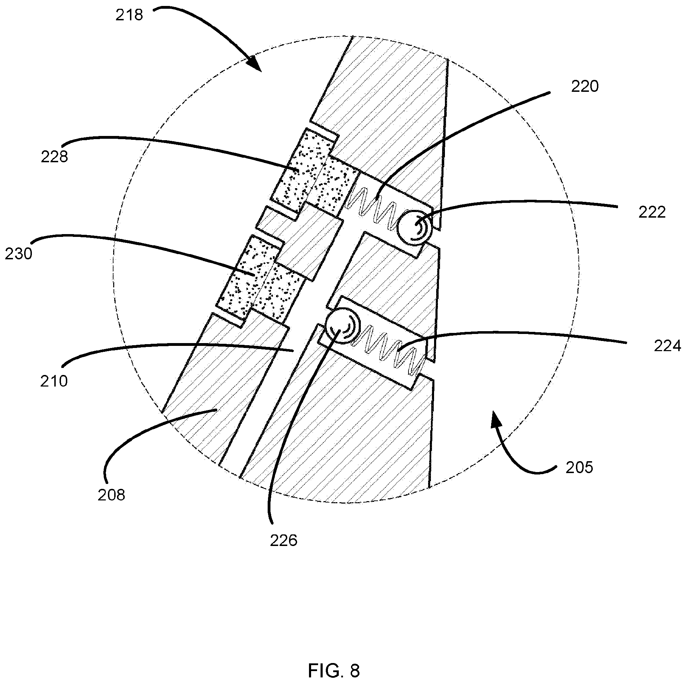

With reference now to FIGS. 3-11, aspects of exemplary gearbox assemblies for translating torque provided by a drive motor to one or more drive wheels shall now be discussed. Referring first to FIGS. 3-4, perspective views of an exemplary gearbox assembly 200 is provided. As shown, the exemplary gearbox assembly 200 of the present invention preferably may include an expansion cap 204 which is secured to the top of an exemplary gearbox 202. As shown, the expansion cap 204 may be bolted or otherwise secured to the exemplary gearbox 202 and may include a seal/gasket 209 between the expansion cap 204 and gearbox 202.

As shown, the expansion cap 204 may be formed as a domed enclosure which encloses a volume of air within a central cavity 205. According to a preferred embodiment, the expansion cap 204 preferably may include an expansion cap vent enclosure 208. Additionally, the gearbox 202 may be formed with a gearbox casting vent enclosure 212. Preferably, the expansion cap vent enclosure 208 and the gearbox casting vent enclosure 212 are formed to connect/mate so that they may enclose one or more connected internal air passages as discussed further below. As shown, the expansion cap vent enclosure 208 may preferably include a vent cap plug 206 or other sealing assemblies as discussed below.

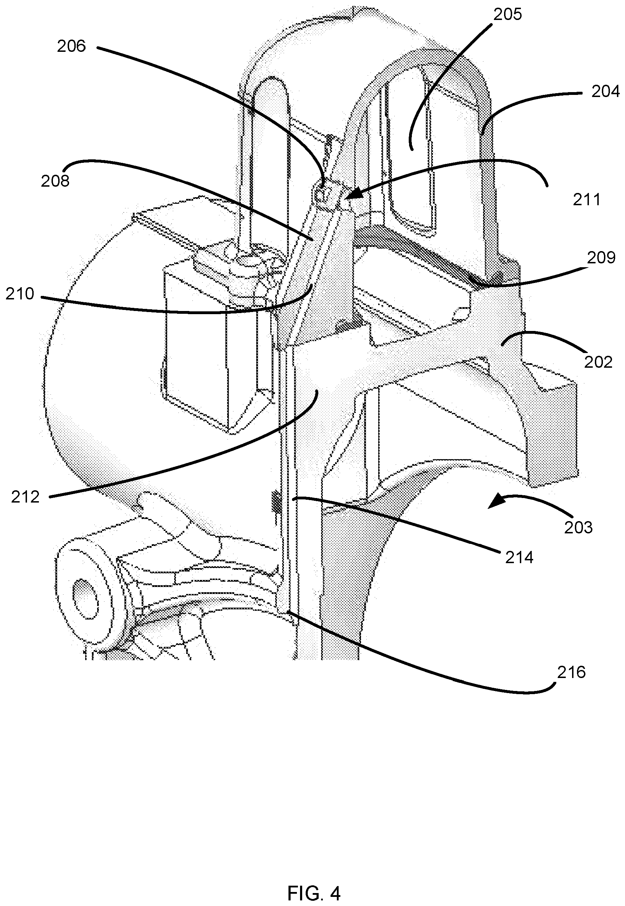

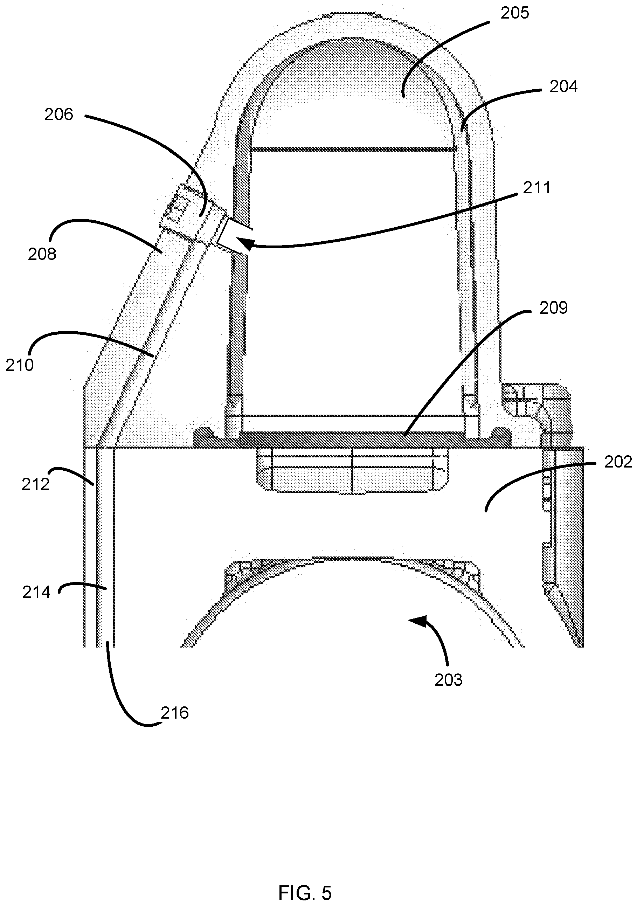

Referring to FIGS. 4 and 5, the expansion cap vent enclosure 208 preferably may enclose at least one expansion cap vent channel 210. The vent channel 210 may preferably extend from the vent plug passage 211 and through to the lower surface of the expansion cap vent enclosure 208. The gearbox casting vent enclosure 212 preferably includes at least one gearbox casting vent channel 214 which extends the length of the gearbox casting vent enclosure 212 and which is open to the atmosphere via a casting vent outlet 216.

As shown, when the expansion cap 204 is connected to the gearbox 202, the expansion cap vent enclosure 208 and the gearbox casting vent enclosure 212 are preferably aligned and mated so that the expansion cap vent channel 210 and gearbox casting vent channel 214 form a single continuous air channel which allows controlled venting from within the expansion cap 204 to the atmosphere.

As further shown in FIG. 5, the expansion cap vent channel 210 preferably interfaces with the vent plug passage 211 which preferably contains a vent cap plug 206 or another valve assembly so that the vent cap plug 206 (or other valve assembly) may control the flow of air out from the expansion cap cavity 205 and into the expansion cap vent channel 210. In this way, the expansion cap assembly and gearbox design of the present invention preferably allows the gearbox 202 to controllably breathe to the atmosphere. More specifically, the air channels 210, 214 of the present invention, which are built into the expansion cap vent enclosure 208 and the gearbox casting vent enclosure 212 respectively, preferably allow for controlled venting while limiting contaminants into the expansion cap 204 and/or gearbox cavity 203.

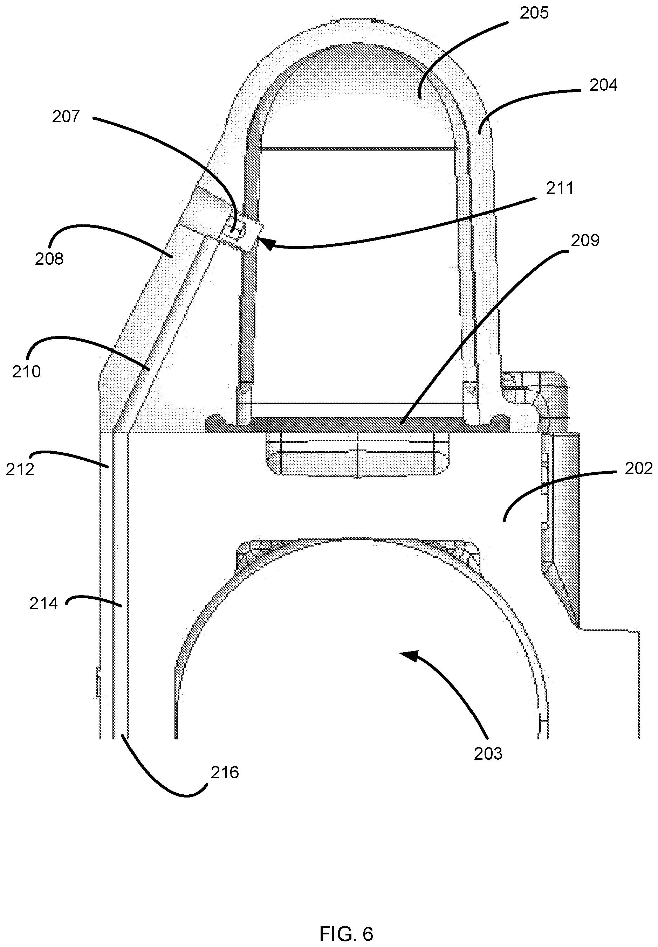

In accordance with further preferred embodiments of the present invention, the expansion cap 204 may be installed on the gearbox 202 after the gearbox 202 has been assembled and filled with oil. According to a first preferred embodiment, the expansion cap 204 may first be shipped with a small retaining plug 207 (shown in FIG. 6) which may be installed in the inner most threaded section of the vent plug passage 211. Preferably, the retaining plug 207 may form an air-tight seal within the vent plug passage 211 and may thus prevent oil from exiting the gearbox during shipping. Thereafter, when the gearbox assembly 200 of the present invention is installed in the field, the small retaining plug 207 may preferably be removed from the vent plug passage 211 and replaced by a functional vent cap plug 206 (or other valve assembly) which may be installed on the outer most part of the threaded portion of the vent plug passage 211.

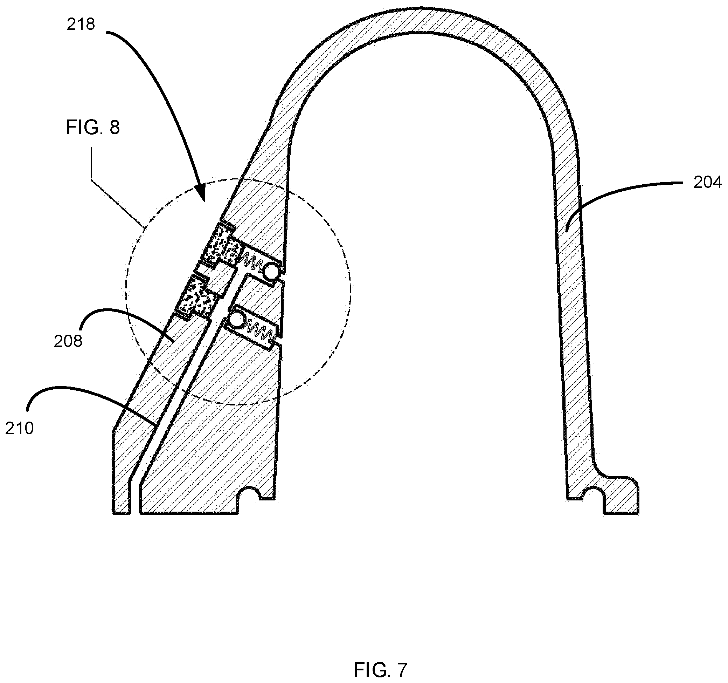

With reference now to FIGS. 7-11, alternative pressure controlling caps and assemblies not part of the present invention shall now be discussed. With first reference to FIGS. 7-8, a first alternative pressure relief assembly 218 may preferably include a first bolt/plug 228 which includes a first spring 220 and ball/disc 222 which are arranged to control and react to positive internal pressure within the expansion cap cavity 205. As shown, when sufficient positive pressure within the expansion cap cavity 205 pushes on the ball 222 and compresses the spring 220, the internal pressure may be released into the expansion cap vent channel 210. Conversely, in the case of sufficient negative pressure, a secondary bolt/plug 230 may include a second ball/disc 226 which may compress a second spring 224 and thus allow negative pressures within the expansion cap cavity 205 to equalize or be reduced.

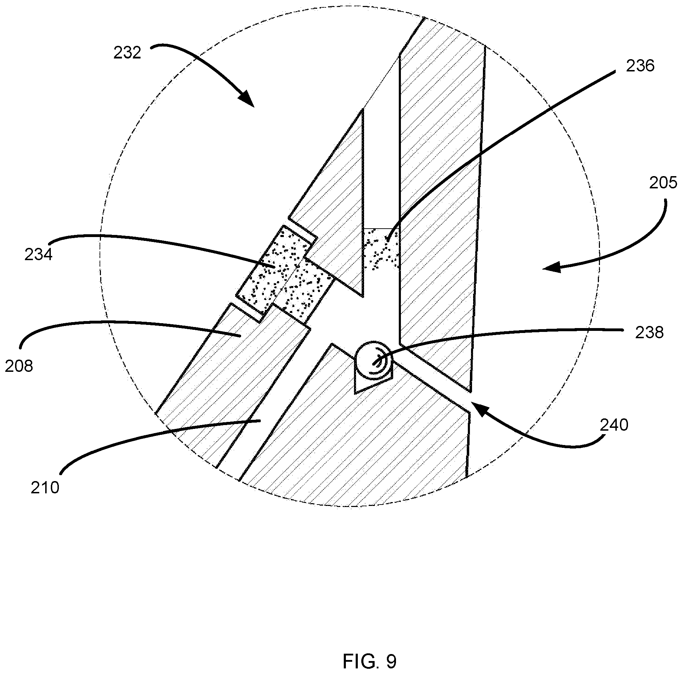

With reference now to FIG. 9, a second alternative pressure controlling assembly 232 not part of the present invention shall now be discussed. As shown, the second alternative preferred pressure controlling assembly 232 preferably includes a bolt/plug 234, a second plug 236, and a ball/disc 238. The assembly 232 preferably functions to limit and close one or more vent pathways 240 when the gearbox is tipped or tilted beyond a given degree. For example, when a gearbox 200 is tilted, the ball/disk 238 may preferably move and settle into the vent pathway 240 or expansion cap vent channel 210 thus preventing contaminates from entering the vent pathway 240 or oil leaving expansion cap vent channel 210.

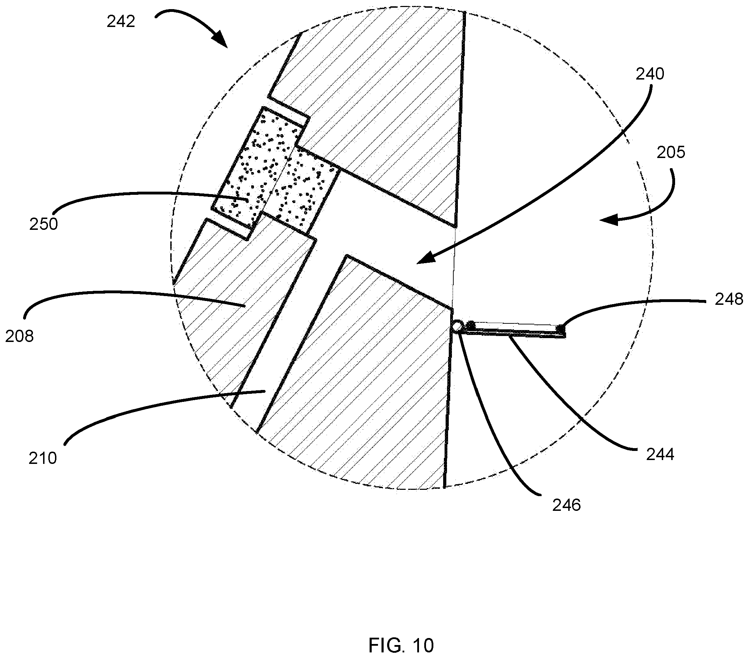

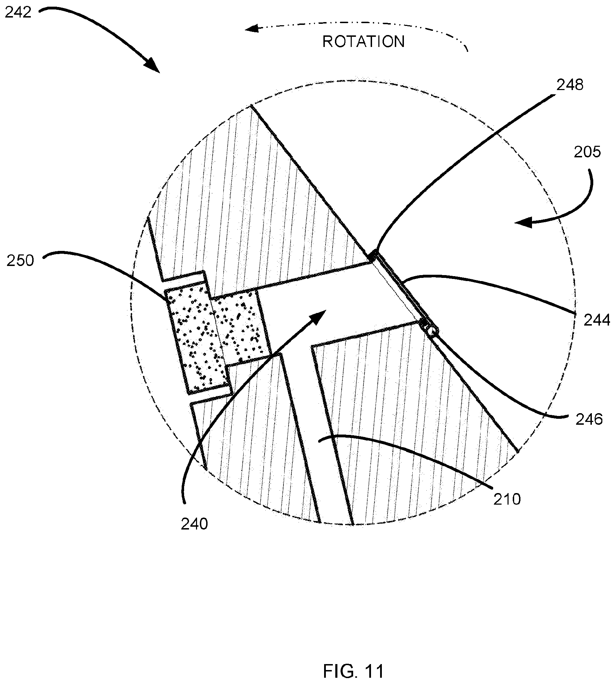

With reference now to FIGS. 10 and 11, a third alternative assembly 242, not part of the present invention, shall now be discussed. As shown, the third alternative assembly 242 preferably may include a bolt/plug 250 and a hinged plate 244 for sealing the vent pathway 240 when the gearbox is tipped or tilted beyond a given degree. As shown, the hinged plate 244 may include a hinge 246 and a seal 248. In operation, the hinged plate 244 is preferably weighted and balanced so that, when the gearbox 200 is upright, the hinged plate 244 may sit open allowing access to the vent pathway 240 and the expansion cap vent channel 210. Conversely, as shown in FIG. 11, when the gearbox 200 is tilted, the plate 244 is preferably weighted to move to a closed position with the seal 248 blocking oil from leaving the central cavity 205.

The present invention as described herein will preferably allow a wheel gearbox to vent freely to the atmosphere without contaminating the crops that are being irrigated, and will help prevent other leak issues associated with the wheel gearbox. The present invention may further be used on a variety of gearbox arrangements. For example, the present invention could be used on a center-drive gearbox or the like. The scope of the present invention should be determined not by the embodiments illustrated, but by the appended claims and their legal equivalents.

## Claims

1. A gearbox assembly (200), wherein the gearbox assembly (200) comprises:
a gearbox (202), wherein the gearbox (202) comprises a gearbox vent enclosure (212);
wherein the gearbox vent enclosure (212) comprises a gearbox vent channel (214) and a gearbox vent outlet (216);
an expansion cap (204), wherein the expansion cap (204) comprises an expansion cap cavity (205) which encloses a volume of air; wherein the expansion cap (204) is attached to a top surface of the gearbox (202); wherein the expansion cap (204) comprises an expansion cap vent enclosure (208); wherein the expansion cap vent enclosure (208) comprises a first vent plug passage (211) and an expansion cap vent channel (210); wherein the first vent plug passage (211) is in gaseous communication with the expansion cap cavity (205); wherein the first vent plug passage (211) is further in gaseous communication with the expansion cap vent channel (210);
a first vent plug (206); wherein the first vent plug (206) is removably inserted into the first vent plug passage (211); wherein the expansion cap vent channel (210) is further in gaseous communication with the gearbox vent channel (214); wherein the gearbox vent channel (214) is in gaseous communication with an atmosphere external to the gearbox assembly (200) via the gearbox vent outlet (216);
**characterized in that** a central gasket (209), wherein the central gasket (209) is secured between the expansion cap (204) and the gearbox (202),
wherein the assembly (200) further comprises a first spherical body within the first vent plug passage (211); wherein the first spherical body is configured to move between a first open position and a second closed position; wherein the first spherical body is configured to move between the first open position and the second closed position in response to changes in the orientation of the assembly (200).

2. The assembly (200) of claim 1, wherein the expansion cap cavity (205) comprises a domed enclosure which encloses a volume of air within a central cavity (205).

3. The assembly (200) of claim 2, wherein the expansion cap vent channel (210) extends from the first vent plug passage (211) and through the expansion cap vent enclosure (208); wherein the expansion cap vent channel (210) is located to align with and mate with the gearbox vent channel (214);

4. The assembly (200) of claim 3, wherein the gearbox vent channel (214) extends through the gearbox vent enclosure (212) to the gearbox vent outlet (216).

5. The assembly (200) of claim 4, wherein the expansion cap vent enclosure (208) and the gearbox vent enclosure (212) are aligned and mated so that the expansion cap vent channel (210) and the gearbox vent channel (214) form a single continuous air channel which allows controlled venting from within the expansion cap (204) to the atmosphere.

6. The assembly (200) of claim 1, wherein the first spherical body allows air to pass through the first vent plug passage (211) and into the expansion cap vent channel (210) when the first spherical body is in the first open position; wherein the first spherical body blocks air from passing through the first vent plug passage (211) when the first spherical body is in the second closed position.

## Patentansprüche

1. Getriebebaugruppe (200), wobei die Getriebebaugruppe (200) umfasst:
ein Getriebe (202), wobei das Getriebe (202) ein Getriebeentlüftungsgehäuse (212) umfasst; wobei das Getriebeentlüftungsgehäuse (212) einen Getriebeentlüftungskanal (214) und einen Getriebeentlüftungsauslass (216) umfasst;
eine Expansionskappe (204), wobei die Expansionskappe (204) einen Expansionskappenhohlraum (205) umfasst, der ein Luftvolumen einschließt; wobei die Expansionskappe (204) an einer oberen Oberfläche des Getriebes (202) befestigt ist; wobei die Expansionskappe (204) ein Expansionskappen-Entlüftungsgehäuse (208) umfasst; wobei das Expansionskappen-Entlüftungsgehäuse (208) einen ersten Entlüftungsstopfendurchgang (211) und einen Expansionskappen-Entlüftungskanal (210) umfasst; wobei der erste Entlüftungsstopfendurchgang (211) in Gasverbindung mit dem Expansionskappenhohlraum (205) steht; wobei der erste Entlüftungsstopfendurchgang (211) ferner in Gasverbindung mit dem Expansionskappen-Entlüftungskanal (210) steht;
einen ersten Entlüftungsstopfen (206); wobei der erste Entlüftungsstopfen (206) lösbar in den ersten Entlüftungsstopfendurchgang (211) eingesetzt ist; wobei der Expansionskappen-Entlüftungskanal (210) ferner in Gasverbindung mit dem Getriebeentlüftungskanal (214) steht; wobei der Getriebeentlüftungskanal (214) über den Getriebeentlüftungsauslass (216) in Gasverbindung mit einer Atmosphäre außerhalb der Getriebebaugruppe (200) steht;
**gekennzeichnet durch** eine Zentraldichtung (209), wobei die Zentraldichtung (209) zwischen der Expansionskappe (204) und dem Getriebe (202) angebracht ist,
wobei die Baugruppe (200) ferner einen ersten kugelförmigen Körper innerhalb des ersten Entlüftungsstopfendurchgangs (211) umfasst; wobei der erste kugelförmige Körper dazu ausgelegt ist, sich zwischen einer ersten offenen Position und einer zweiten geschlossenen Position zu bewegen; wobei der erste kugelförmige Körper dazu ausgelegt ist, sich als Reaktion auf Änderungen der Ausrichtung der Baugruppe (200) zwischen der ersten offenen Position und der zweiten geschlossenen Position zu bewegen.

2. Baugruppe (200) nach Anspruch 1, wobei der Expansionskappenhohlraum (205) ein gewölbtes Gehäuse umfasst, das ein Luftvolumen innerhalb eines Zentralhohlraums (205) einschließt.

3. Baugruppe (200) nach Anspruch 2, wobei der Expansionskappen-Entlüftungskanal (210) sich vom ersten Entlüftungsstopfendurchgang (211) und durch das Expansionskappen-Entlüftungsgehäuse (208) erstreckt; wobei der Expansionskappen-Entlüftungskanal (210) so angeordnet ist, dass er mit dem Getriebeentlüftungskanal (214) fluchtet und damit zusammenpasst.

4. Baugruppe (200) nach Anspruch 3, wobei der Getriebeentlüftungskanal (214) sich durch das Getriebeentlüftungsgehäuse (212) zum Getriebeentlüftungsauslass (216) erstreckt.

5. Baugruppe (200) nach Anspruch 4, wobei das Expansionskappen-Entlüftungsgehäuse (208) und das Getriebeentlüftungsgehäuse (212) so ausgerichtet sind und zusammenpassen, dass der Expansionskappen-Entlüftungskanal (210) und der Getriebeentlüftungskanal (214) einen einzigen durchgehenden Luftkanal bilden, der eine kontrollierte Entlüftung aus dem Inneren der Expansionskappe (204) in die Atmosphäre ermöglicht.

6. Baugruppe (200) nach Anspruch 1, wobei der erste kugelförmige Körper das Durchströmen von Luft durch den ersten Entlüftungsstopfendurchgang (211) und in den Expansionskappen-Entlüftungskanal (210) ermöglicht, wenn der erste kugelförmige Körper in der ersten offenen Position ist; wobei der erste kugelförmige Körper das Durchströmen von Luft durch den ersten Entlüftungsstopfendurchgang (211) blockiert, wenn der erste kugelförmige Körper in der zweiten geschlossenen Position ist.

## Revendications

1. Ensemble de boîte de transmission (200), dans lequel l'ensemble de boîte de transmission (200) comprend :
une boîte de transmission (202), dans lequel la boîte de transmission (202) comprend une enceinte d'évent de boîte de transmission (212) ; dans lequel l'enceinte d'évent de boîte de transmission (212) comprend un canal d'évent de boîte de transmission (214) et une sortie d'évent de boîte de transmission (216) ;
un couvercle à expansion (204), dans lequel le couvercle à expansion (204) comprend une cavité de couvercle à expansion (205) qui renferme un volume d'air ; dans lequel le couvercle à expansion (204) est fixé à une surface supérieure de la boîte de transmission (202) ; dans lequel le couvercle à expansion (204) comprend une enceinte d'évent de couvercle à expansion (208) ; dans lequel l'enceinte d'évent de couvercle à expansion (208) comprend un premier passage de bouchon d'évent (211) et un canal d'évent de couvercle à expansion (210) ; dans lequel le premier passage de bouchon d'évent (211) est en communication gazeuse avec la cavité de couvercle à expansion (205) ; dans lequel le premier passage de bouchon d'évent (211) est en outre en communication gazeuse avec le canal d'évent de couvercle à expansion (210) ;
un premier bouchon d'évent (206) ; dans lequel le premier bouchon d'évent (206) est inséré de manière amovible dans le premier passage de bouchon d'évent (211) ; dans lequel le canal d'évent de couvercle à expansion (210) est en outre en communication gazeuse avec le canal d'évent de boîte de transmission (214) ; dans lequel le canal d'évent de boîte de transmission (214) est en communication gazeuse avec une atmosphère externe à l'ensemble de boîte de transmission (200) par l'intermédiaire de la sortie d'évent de boîte de transmission (216) ;
**caractérisé par** un joint central (209), le joint central (209) étant fixé entre le couvercle à expansion (204) et la boîte de transmission (202),
dans lequel l'ensemble (200) comprend en outre un premier corps sphérique à l'intérieur du premier passage de bouchon d'évent (211) ; dans lequel le premier corps sphérique est configuré pour se déplacer entre une première position ouverte et une seconde position fermée ; dans lequel le premier corps sphérique est configuré pour se déplacer entre la première position ouverte et la seconde position fermée en réponse à des changements dans l'orientation de l'ensemble (200).

2. Ensemble (200) selon la revendication 1, dans lequel la cavité de couvercle à expansion (205) comprend une enceinte en forme de dôme qui renferme un volume d'air à l'intérieur d'une cavité centrale (205).

3. Ensemble (200) selon la revendication 2, dans lequel le canal d'évent de couvercle à expansion (210) s'étend à partir du premier passage de bouchon d'évent (211) et à travers l'enceinte d'évent de couvercle à expansion (208) ; dans lequel le canal d'évent de couvercle à expansion (210) est situé pour s'aligner avec et s'accoupler avec le canal d'évent de boîte de transmission (214).

4. Ensemble (200) selon la revendication 3, dans lequel le canal d'évent de boîte de transmission (214) s'étend à travers l'enceinte d'évent de boîte de transmission (212) jusqu'à la sortie d'évent de boîte de transmission (216).

5. Ensemble (200) selon la revendication 4, dans lequel l'enceinte d'évent de couvercle à expansion (208) et l'enceinte d'évent de boîte de transmission (212) sont alignées et accouplées de sorte que le canal d'évent de couvercle à expansion (210) et le canal d'évent de boîte de transmission (214) forment un seul canal d'air continu qui permet une ventilation régulée depuis l'intérieur du couvercle à expansion (204) vers l'atmosphère.

6. Ensemble (200) selon la revendication 1, dans lequel le premier corps sphérique permet à l'air de passer à travers le premier passage de bouchon d'évent (211) et dans le canal d'évent de couvercle à expansion (210) lorsque le premier corps sphérique est dans la première position ouverte ; dans lequel le premier corps sphérique empêche l'air de passer à travers le premier passage de bouchon d'évent (211) lorsque le premier corps sphérique est dans la seconde position fermée.
